# EUROPEAN PATENT APPLICATION

(11) **EP 4 556 195 A1**
(43) Date of publication of application: **21.05.2025**
(21) Application number: 24212645.6
(22) Date of filing: 13.11.2024
(51) Int. Cl.: B29C 48/41, B29C 48/40, B29C 48/52, B29C 48/57, B29C 48/67, B29C 48/505, B29B 7/48, B29B 7/20, B29C 48/25

(54) **AN ELEMENT FOR A COUNTER-ROTATING TWIN-SCREW PROCESSOR**

(30) Priority: 14.11.2023 IN 202341077496
(71) Applicant: Steer Engineering Private Limited, Bengaluru 560 058 (IN)
(72) Inventor: PADMANABHAN, BABU, Bangalore (IN)
(74) Representative: Renaudo, Adrien Hanouar

(57) **Abstract**

An element for a counter-rotating twin screw processor having a pair of screw shafts is disclosed. The element comprises an axial bore for mounting on a screw shaft. The element further comprises multiple lobes and defines a first outer diameter (FOD), a second outer diameter (SOD), a first inner diameter (FID) and a second inner diameter (SID). The FOD is larger than the SOD, the FID is larger than the SID, and a radial center distance 'a' between the screw shafts is defined by (FOD+SID)/2. At least one lobe has a cross sectional profile in the radial plane defining a first segment extending from the FOD to the FID and a second segment extending from the FOD to the SID, or the first segment extending from the SOD to the FID and the second segment extending from the SOD to the SID.

## Description

### FIELD OF INVENTION

The present disclosure relates to the field of twin-screw processors. More particularly, the disclosure relates to an element for a counter-rotating twin-screw processor.

### BACKGROUND OF THE INVENTION

Counter-rotating twin screw processors, such as twin-screw extruders, are known in art to comprise a long barrel with two parallel bores that intersect each other. Processing elements, such as screws, mounted on two parallel shafts respectively are placed in the bores. Each element has a flight formed thereon that extends along the length of the element and comprises of raised portions or lobes having larger radial diameter than a root diameter of the element.

In counter-rotating twin-screw processors, the processing elements are configured to rotate in opposite directions with respect to each other. The counter-rotating twin screw processors are used in production, compounding, and processing of materials including, for example, plastics, food, paint and pharmaceuticals. A primary task carried out by the counter-rotating twin screw processors is mixing of the materials to produce a melt and to force a melt stream through an orifice at high pressure. There is a need to improve the material mixing capabilities of the counter-rotating twin-screw processors and elements for a counter rotating processor. There is also a need for elements for a counter rotating processor with reduced material stagnation and improved wiping capabilities.

### SUMMARY OF THE INVENTION

In an aspect of the disclosure, an element for a counter-rotating twin screw processor having a pair of screw shafts is disclosed. The element comprises an axial bore for mounting on a screw shaft. The element further includes multiple lobes and defines a first outer diameter (FOD), a second outer diameter (SOD), a first inner diameter (FID) and a second inner diameter (SID). The first outer diameter is larger than the second outer diameter, the first inner diameter is larger than the second inner diameter, and a radial center distance 'a' between the screw shafts is defined by (FOD+SID)/2. At least one lobe of the multiple lobes has a cross sectional profile in the radial plane defining a first segment extending from the first outer diameter to the first inner diameter and a second segment extending from the first outer diameter to the second inner diameter, or the first segment extending from the second outer diameter to the first inner diameter and the second segment extending from the second outer diameter to the second inner diameter.

In another aspect of the present disclosure, a counter-rotating screw for a counter-rotating twin screw processor is disclosed. The counter-rotating twin screw processor defines an axial bore for housing the counter-rotating screw and another counter-rotating screw paired with the counter-rotating screw. At least a portion of the counter-rotating screw includes multiple lobes and defines a first outer diameter (FOD), a second outer diameter (SOD), a first inner diameter (FID) and a second inner diameter (SID). The first outer diameter is larger than the second outer diameter, the first inner diameter is larger than the second inner diameter, and a radial center distance 'a' between the paired counter-rotating screws is defined by (FOD+SID)/2. At least one lobe of the multiple lobes has a cross sectional profile in a radial plane defining a first segment extending from the first outer diameter to the first inner diameter and a second segment extending from the first outer diameter to the second inner diameter, or the first segment extending from the second outer diameter to the first inner diameter and the second segment extending from the second outer diameter to the second inner diameter.

In yet another aspect of the present disclosure, a counter-rotating twin-screw processor is disclosed. The counter-rotating twin-screw processor comprises a barrel defining a first cylindrical bore and a second cylindrical bore. The first cylindrical bore and the second cylindrical bore intersect to form a chamber. A first shaft rotates within the first bore about an axis and a second shaft rotates within the second bore about an axis. At least one element is coupled to the first shaft and the second shaft respectively. The element includes multiple lobes and defines a first outer diameter (FOD), a second outer diameter (SOD), a first inner diameter (FID) and a second inner diameter (SID). The first outer diameter is larger than the second outer diameter, the first inner diameter is larger than the second inner diameter, and a radial center distance 'a' between the first and second shafts is defined by (FOD+SID)/2. At least one lobe of the multiple lobes has a cross sectional profile in a radial plane defining a first segment extending from the first outer diameter to the first inner diameter and a second segment extending from the first outer diameter to the second inner diameter, or the first segment extending from the second outer diameter to the first inner diameter and the second segment extending from the second outer diameter to the second inner diameter.

### BRIEF DESCRIPTION OF DRAWINGS

FIG. 1 is an exemplary illustration of a counter-rotating twin screw processor, in accordance with an embodiment of the present disclosure;
FIG. 2 is an exemplary illustration of a side view of processing elements in the counter-rotating twin screw processor of FIG. 1, in accordance with an embodiment of the present disclosure;
FIGS. 3 is an exemplary illustration of a cross-sectional view of a tri-lobed processing element of FIG. 2 defined in a radial plane of the processing element, in accordance with an embodiment of the present disclosure;
FIG. 4 is an exemplary illustration of a cross-sectional view of a bi-lobed processing element of FIG. 2 defined in the radial plane of the processing element, in accordance with an embodiment of the present disclosure; and
FIGS. 5 is an exemplary illustration of a cross-sectional view of a tri-lobed processing element of FIG. 2 defined in the radial plane of the processing element, in accordance with another embodiment of the present disclosure.

### DETAILED DESCRIPTION

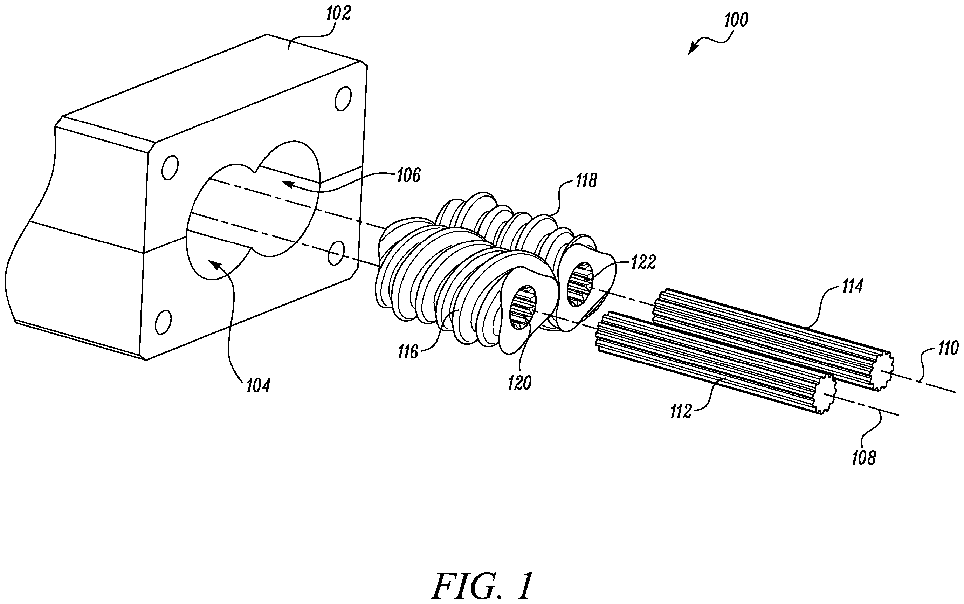

Referring to FIG. 1, an exemplary illustration of a counter-rotating twin screw processor 100, herein referred to as "processor 100" is disclosed. The processor 100 may comprise a housing 102 having two cylindrical housing bores 104, 106. The two cylindrical housing bores 104, 106 may have an axis 108 and 110 respectively disposed parallelly with respect to each other. A first screw shaft 112 and a second screw shaft 114 are disposed in the two cylindrical housing bores 104, 106 respectively. A pair of processing elements 116, 118 or 'elements' may be mounted on the screw shafts 112, 114 respectively. The elements 116, 118 may comprise grooved axial bores 120, 122 in which splines of the screw shafts 112, 114 respectively are engaged. It may be apparent that the elements 116, 118 may also be configured for mounting on the screw shafts 112, 114 via different engagement means.

In some embodiments, the element 116 may be integral to the first screw shaft 112 such that the element 116 and the first screw shaft 112 may together define a single component, herein referred to as a "counter-rotating screw". Similarly, the element 118 may be integral to the second screw shaft 114 such that the element 118 and the second screw shaft 114 may together define another counter-rotating screw. The two counter-rotating screws may be housed in the two cylindrical housing bores 104, 106 respectively. In some embodiments, the two counter-rotating screws may exhibit an outer profile similar to outer profiles of the elements 116, 118 respectively.

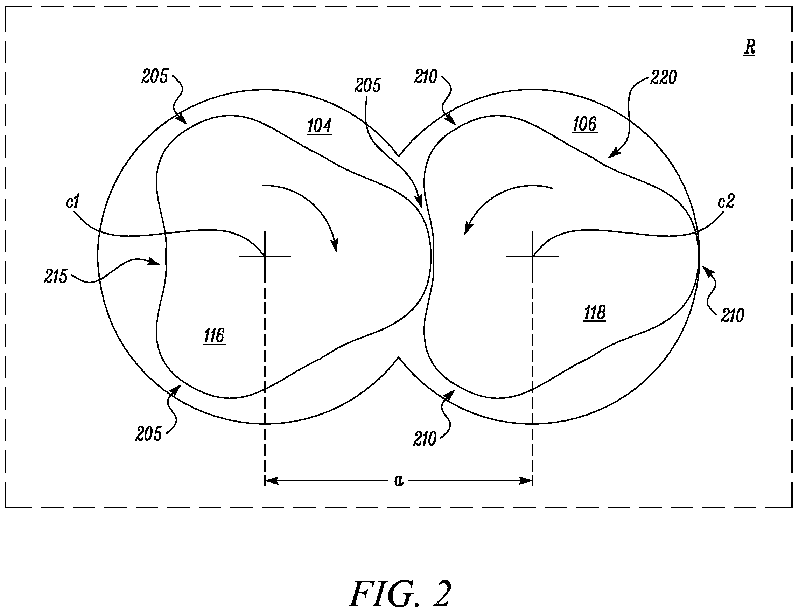

Referring to FIG. 2, an exemplary illustration of a side view of the elements 116, 118 in the processor 100 of FIG. 1 respectively is disclosed. In some embodiments, the elements 116, 118 may define multiple lobes including, but not limited to, two, three, or four lobes. For example, in some embodiments, the elements 116, 118 may each be tri-lobed defined by lobes 205 and 210 respectively. The lobes 205 and 210 may define screw profiles 215 and 220 of the elements 116, 118 respectively. In some embodiments, the screw profile 215 on the element 116 may determine the screw profile 220 on the element 118 or vice versa. Accordingly, the screw profile 215 may be referred to as a generating screw profile and the screw profile 220 may be referred to as a generated screw profile. In some embodiments, the elements 116, 118 may together define a pair of elements such that for each cross-section of the element 116 on the first screw shaft 112 there exists a conjugate or a substantially conjugate cross-section of the element 118 on the corresponding second screw shaft 114. In some embodiments, the elements 116, 118 may be rotated in clockwise and counter-clockwise directions respectively and in opposite directions with respect to each other. For example, the element 116 may be rotated in the clockwise direction and the element 118 may be rotated in the counter-clockwise direction. In some embodiments, the elements 116, 118 may also define radial centers c1 and c2 in a radial plane 'R' of the elements 116, 118 respectively such that a radial center distance 'a' is defined between the radial centers c1 and c2.

For purposes of clarity and understanding, the element 116 will be described hereinafter in detail and it may be understood that the same would also be applicable to the element 118.

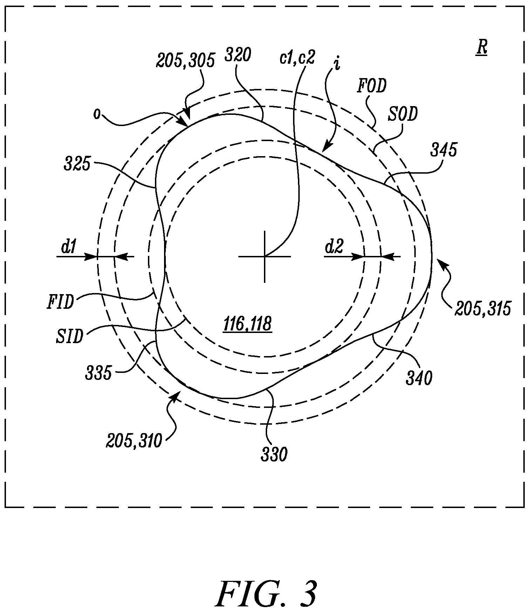

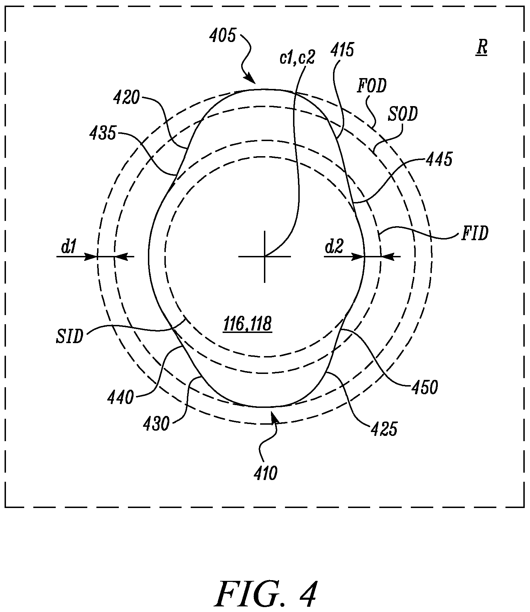

Referring to FIGS. 3-4, exemplary illustrations of a cross-sectional view of the element 116 of FIG. 2 defined in the radial plane 'R' of the element 116 are disclosed. In some embodiments, the element 116 may be a tri-lobe element defining lobes 305, 310, and 315, as shown in FIG. 3, or a bi-lobe element defining lobes 405 and 410, as shown in FIG. 4. It may be understood that for instances when the counter-rotating screw is used, in place of the element 116 mounted on the first screw shaft 112, the counter-rotating screw may comprise the lobes 305, 310, and 315, or the lobes 405 and 410.

In some embodiments, the element 116 may define a first outer diameter (FOD), a second outer diameter (SOD), a first inner diameter (FID) and a second inner diameter (SID). In some embodiments, the first outer diameter (FOD) may be larger than the second outer diameter (SOD) and the first inner diameter (FID) may be larger than the second inner diameter (SID). In some embodiments, the second inner diameter (SID) may correspond to the root diameter of the element 116. In some embodiments, the radial center c1 of the element 116 may correspond to a center or midpoint of the first outer diameter (FOD), the second outer diameter (SOD), the first inner diameter (FID) and/or the second inner diameter (SID). In some embodiments, the radial center distance 'a' (see FIG. 2) between the screw shafts 112, 114 (see FIG. 1) may be defined by (FOD+SID)/2. In some embodiments, the difference in diameter 'd1' between the first outer diameter (FOD) and the second outer diameter (SOD) may be different from or equal to the difference in diameter 'd2' between the first inner diameter (FID) and the second inner diameter (SID). In a preferred embodiment, the difference in diameter 'd1' between the first outer diameter (FOD) and the second outer diameter (SOD) is equal to the difference in diameter 'd2' between the first inner diameter (FID) and the second inner diameter (SID).

In some embodiments, at least one lobe of the element 116 may have the first outer diameter (FOD) as an outer diameter of the lobe. In some embodiments, the outer diameter of the lobe may be defined by a crest end `o' of the lobe. For example, when the element 116 is a tri-lobe element, the lobe 315 may have the first outer diameter (FOD) as the outer diameter of the lobe 315 measured from the radial center c1 of the element 116 as shown in FIG. 3. Similarly, when the element 116 is a bi-lobe element, the lobe 405 may have the first outer diameter (FOD) as the outer diameter of the lobe 405 measured from the radial center c1 of the element 116 as shown in FIG. 4.

In some embodiments, at least one lobe of the element 116 may have the second outer diameter (SOD) as the outer diameter of the lobe. For example, when the element 116 is a tri-lobe element, the lobes 305 and 310 may have the second outer diameter (SOD) as the outer diameter of the lobes 305 and 310 respectively measured from the radial center c1 of the element 116 as shown in FIG. 3. Similarly, when the element 116 is a bi-lobe element, the lobe 410 may have the second outer diameter (SOD) as the outer diameter of the lobe 410 measured from the radial center c1 of the element 116 as shown in FIG. 4.

In some embodiments, at least one lobe of the element may have the first inner diameter (FID) or the second inner diameter (SID) as an inner diameter of the at least one lobe. In some embodiments, the inner diameter of the lobe may be defined by a trough end 'i' of the lobe. For example, when the element 116 is a tri-lobe element, the lobes 305 and 310 may have the first inner diameter (FID) and/or the second inner diameter (SID) as the inner diameter of the lobes 305 and 310 respectively. Similarly, when the element 116 is a bi-lobe element, the lobes 405, 410 may have the first inner diameter (FID) and/or the second inner diameter (SID) as the inner diameter of the lobes 405, 410 respectively.

In some embodiments, the lobes of the element 116 may have a cross sectional profile in the radial plane 'R' defining a first segment and a second segment respectively. For example, when the element 116 is a tri-lobe element, lobes 305, 310, and 315 of the element 116 may define the first segments 320, 330, and 340 and the second segments 325, 335, and 345 respectively, as shown in FIG. 3. Similarly, when the element 116 is a bi-lobe element, lobes 405 and 410 of the element 116 may define the first segments 420 and 430 and second segments 415 and 425 respectively, as shown in FIG. 4.

In some embodiments, at least one lobe of the element 116 may define the first segment extending from the first outer diameter (FOD) to the first inner diameter (FID) and the second segment extending from the first outer diameter (FOD) to the second inner diameter (SID). For example, when the element 116 is a bi-lobe element, the first segment 420 of the lobe 405 may extend from the first outer diameter (FOD) to the first inner diameter (FID) and the second segment 415 of the lobe 405 may extend from the first outer diameter (FOD) to the second inner diameter (SID) as shown in FIG. 4.

In some embodiments, at least one lobe of the element 116 may define the first segment extending from the second outer diameter (SOD) to the first inner diameter (FID) and the second segment extending from the second outer diameter (SOD) to the second inner diameter (SID). For example, when the element 116 is a tri-lobe element, the first segments 320 and 330 of the lobes 305 and 310 respectively may extend from the second outer diameter (SOD) to the first inner diameter (FID) and the second segments 325 and 335 of the lobes 305, 310 respectively may extend from the second outer diameter (SOD) to the second inner diameter (SID) as shown in FIG. 3. Similarly, when the element 116 is a bi-lobe element, the first segment 430 of the lobe 410 may extend from the second outer diameter (SOD) to the first inner diameter (FID) and the second segment 425 of the lobe 410 may extend from the second outer diameter (SOD) to the second inner diameter (SID) as shown in FIG. 4.

In some embodiments, both the first and the second segments of one of the lobes of the element 116 may extend from the first outer diameter (FOD) to the first inner diameter (FID). For example, when the element 116 is a tri-lobe element, the first segment 340 and the second segment 345 of the lobe 315 may extend from the first outer diameter (FOD) to the first inner diameter (FID) as shown in FIG. 3. Similarly, it may be understood that in other embodiments, both the first and the second segments of one of the lobes of the element 116 may extend from the first outer diameter (FOD) to the second inner diameter (SID), the second outer diameter (SOD) to the first inner diameter (FID), or the second outer diameter (SOD) to the second inner diameter (SID).

In some embodiments, the element 116 may define a third segment extending from the first inner diameter (FID) to the first outer diameter (FOD) and a fourth segment extending from the first inner diameter (FID) to the second outer diameter (SOD). In some embodiments, the third and fourth segments may be defined between the lobes of the element 116. For example, when the element 116 is a bi-lobe element, the element 116 may define the third segment 435 extending from the first inner diameter (FID) to the first outer diameter (FOD) and the fourth segment 440 extending from the first inner diameter (FID) to the second outer diameter (SOD) as shown in FIG. 4. The third segment 435 and the fourth segment 440 may be defined between the lobes 405 and 410. In some embodiments, the first segment 420 of lobe 405 and the first segment 430 of the lobe 410 may extend and combine along the first inner diameter (FID) to together define the third segment 435 and the fourth segment 440.

In some embodiments, the element 116 may define the third segment extending from the second inner diameter (SID) to the first outer diameter (FOD) and the fourth segment extending from the second inner diameter (SID) to the second outer diameter (SOD). For example, when the element is a bi-lobe element, the element may define the third segment 445 extending from the second inner diameter (SID) to the first outer diameter (FOD) and the fourth segment 450 extending from the second inner diameter (SID) to the second outer diameter (SOD) as shown in FIG. 4. The third segment 445 and the fourth segment 450 may be defined between the lobes 405 and 410. In some embodiments, the second segment 415 of lobe 405 and the second segment 425 of the lobe 410 may extend and combine along the second inner diameter (FID) to together define the third segment 445 and the fourth segment 450.

It may be apparent from the embodiments of the element 116 described in the present disclosure, that different arrangements of the extensions of the segments of the lobes of the elements 116 from the first outer diameter (FOD) to the first inner diameter (FID) or the second inner diameter (SID), and/or from the second outer diameter (SOD) to the first inner diameter (FID) or the second inner diameter (SID) may be envisioned.

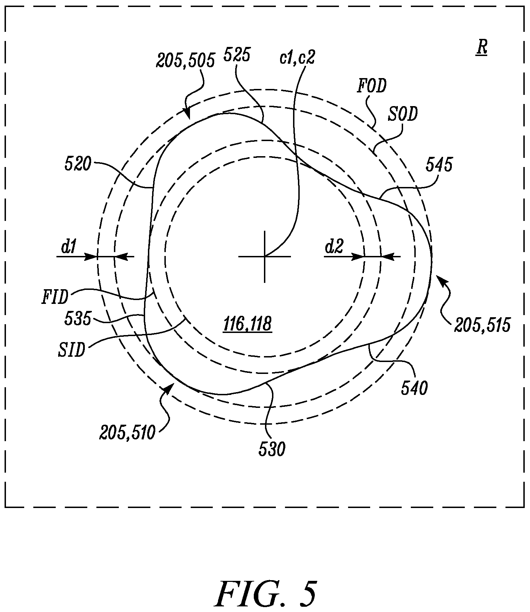

For example, referring to FIG. 5, the element 116 in accordance with another embodiment of the present disclosure is disclosed. The element 116 may be a tri-lobe element defining lobes 505, 510, and 515. The lobes 505, 510, and 515 may define the first segments 520, 530, and 540 and the second segments 525, 535, and 545 respectively. The first segment 520 of the lobe 505 may extend from the second outer diameter (SOD) to the first inner diameter (FID) and the second segment 525 of the lobe 505 may extend from the second outer diameter (SOD) to the second inner diameter (SID). Similarly, the first segment 540 of the lobe 515 may extend from the first outer diameter (FOD) to the first inner diameter (FID) and the second segment 545 of the lobe 515 may extend from the first outer diameter (FOD) to the second inner diameter (FID). Further, both the first and the second segments 530 and 535 of the lobe 510 may extend from the second outer diameter (SOD) to the first inner diameter (FID).

Accordingly, it may be also be apparent from the embodiments of the element 116 described in the present disclosure, that the extension of the first and/or second segments of the different lobes of the element 116 from the first outer diameter (FOD) to the first inner diameter (FID) or the second inner diameter (SID) may be the same or different with respect to at least two lobes, and/or at least two adjacent lobes of the element 116. Similarly, the extension of the first and/or second segments of the different lobes of the element 116 from the second outer diameter (SOD) to the first inner diameter (FID) or the second inner diameter (SID) may be the same or different with respect to at least two lobes, and/or at least two adjacent lobes of the element 116.

For example, referring to FIG. 3, the extensions of the first segments 320, 330 from the second outer diameter (SOD) to the first inner diameter (FID), and the second segments 325, 335 from the second outer diameter (SOD) to the second inner diameter (SID) of the adjacent lobes 305 and 310 respectively may the same.

In another example, referring to FIG. 5, the extensions of the first segment 520 of the lobe 505 from the second outer diameter (SOD) to the first inner diameter (FID) and the second segment 525 from the second outer diameter (SOD) to the second inner diameter (SID) may be different from the extension of the first segment 540 of the adjacent lobe 515 from the first outer diameter (FOD) to the first inner diameter (FID) and the second segment 545 from the first outer diameter (FOD) to the second inner diameter (FID).

In addition, it may be apparent from the embodiments of the element 116 described in the present disclosure, that different arrangements of the extensions of the third and fourth segments of the elements 116 from the first inner diameter (FID) or the second inner diameter (SID) to the first outer diameter (FOD) or the second inner diameter (SOD) may also be contemplated.

### Specific Embodiments are Described Below

An element for a counter-rotating twin screw processor having a pair of screw shafts, the element having an axial bore for mounting on a screw shaft, the element having a plurality of lobes and defining a first outer diameter (FOD), a second outer diameter (SOD), a first inner diameter (FID) and a second inner diameter (SID), such that the first outer diameter is larger than the second outer diameter, the first inner diameter is larger than the second inner diameter, and a radial center distance 'a' between the screw shafts is defined by (FOD+SID)/2, wherein at least one lobe having a cross sectional profile in the radial plane defining a first segment and a second segment, the first segment extending from the first outer diameter to the first inner diameter and the second segment extending from the first outer diameter to the second inner diameter, or the first segment extending from the second outer diameter to the first inner diameter and the second segment extending from the second outer diameter to the second inner diameter.

Such element(s), wherein the difference in diameter between the first outer diameter and the second outer diameter is equal to the difference between the first inner diameter and the second inner diameter.

Such element(s) defining a third segment and a fourth segment, the third segment extending from the first inner diameter to the first outer diameter and the fourth segment extending from the first inner diameter to the second outer diameter, or the third segment extending from the second inner diameter to the first outer diameter and the fourth segment extending from the second inner diameter to the second outer diameter.

Such element(s), wherein at least one lobe having a cross sectional profile in the radial plane defining a first segment and a second segment, the first segment and the second segment extending from the first outer diameter to the first inner diameter, first outer diameter to the second inner diameter, the second outer diameter to first inner diameter, or the second outer diameter to the second inner diameter.

Such element(s), wherein the element is a bi-lobe element.

Such element(s), wherein the element is a tri-lobe element.

Such element(s), wherein at least one lobe of the element has the first outer diameter as its outer diameter and at least one lobe has the second outer diameter as its outer diameter.

Such element(s), wherein at least one lobe of the element has the first inner diameter as its inner diameter and at least one lobe has the second inner diameter as its inner diameter.

A counter-rotating screw for a counter-rotating twin-screw processor having an axial bore housing the counter-rotating screw and another counter-rotating screw paired with the counter-rotating screw, wherein at least one portion of the counter-rotating screw comprises a plurality of lobes and defines a first outer diameter (FOD), a second outer diameter (SOD), a first inner diameter (FID) and a second inner diameter (SID), such that the first outer diameter is larger than the second outer diameter, the first inner diameter is larger than the second inner diameter, and a radial center distance 'a' between the paired counter-rotating screws is defined by (FOD+SID)/2, wherein at least one lobe having a cross sectional profile in a radial plane defining a first segment and a second segment, the first segment extending from the first outer diameter to the first inner diameter and the second segment extending from the first outer diameter to the second inner diameter, or the first segment extending from the second outer diameter to the first inner diameter and the second segment extending from the second outer diameter to the second inner diameter.

Such counter-rotating screw(s), wherein the difference in diameter between the first outer diameter and the second outer diameter is equal to the difference between the first inner diameter and the second inner diameter.

Such counter-rotating screw(s) defining a third segment and a fourth segment, the third segment extending from the first inner diameter to the first outer diameter and the fourth segment extending from the first inner diameter to the second outer diameter, or the third segment extending from the second inner diameter to the first outer diameter and the fourth segment extending from the second inner diameter to the second outer diameter.

Such counter-rotating screw(s), wherein at least one lobe having a cross sectional profile in the radial plane defining a first segment and a second segment, the first segment and the second segment extending from the first outer diameter to the first inner diameter, first outer diameter to the second inner diameter, the second outer diameter to first inner diameter, or the second outer diameter to the second inner diameter.

Such counter-rotating screw(s), wherein the counter-rotating screw is a bi-lobe counter-rotating screw.

Such counter-rotating screw(s), wherein the counter-rotating screw is a tri-lobe counter-rotating screw.

### Industrial Applicability

The elements 116, 118 as taught in the present disclosure are suitable for use in counter-rotating twin screw processors. The elements 116, 118 as taught may improve a mixing and/or melting capability of the processor 100 and help in achieving a homogeneous melt mix. In addition, the elements 116, 118 as taught may also reduce material stagnation and improve an elongational flow of the materials during the melting and homogenizing process. Furthermore, the elements 116, 118 as taught may facilitate the melting and/or homogenizing of the materials at a process temperature lesser than generally involved in the melting and/or homogenizing process in the processor 100. In particular, the elements 116, 118 may be suitable for processing of temperature sensitive materials such as pharmaceutical ingredients including API. The elements 116, 118 may also suitable for processing mixed materials with different melting or softening points such as waste material for recycling.

## Claims

1. An element for a counter-rotating twin screw processor having a pair of screw shafts, the element having an axial bore for mounting on a screw shaft of the pair of screw shafts, the element having a plurality of lobes and defining a first outer diameter (FOD), a second outer diameter (SOD), a first inner diameter (FID) and a second inner diameter (SID), such that the first outer diameter is larger than the second outer diameter, the first inner diameter is larger than the second inner diameter, and a radial center distance 'a' between the screw shafts is defined by (FOD+SID)/2, wherein at least one lobe having a cross sectional profile in the radial plane defining a first segment and a second segment, the first segment extending from the first outer diameter to the first inner diameter and the second segment extending from the first outer diameter to the second inner diameter, or the first segment extending from the second outer diameter to the first inner diameter and the second segment extending from the second outer diameter to the second inner diameter.

2. The element of claim 1, wherein a difference in diameter between the first outer diameter and the second outer diameter is equal to a difference in diameter between the first inner diameter and the second inner diameter.

3. The element of claim 1 defining a third segment and a fourth segment, the third segment extending from the first inner diameter to the first outer diameter and the fourth segment extending from the first inner diameter to the second outer diameter, or the third segment extending from the second inner diameter to the first outer diameter and the fourth segment extending from the second inner diameter to the second outer diameter.

4. The element of claim 1, wherein at least one lobe having a cross sectional profile in the radial plane defining a first segment and a second segment, the first segment and the second segment extending from the first outer diameter to the first inner diameter, first outer diameter to the second inner diameter, the second outer diameter to first inner diameter, or the second outer diameter to the second inner diameter.

5. The element of claim 1, wherein the element is a bi-lobe element.

6. The element of claim 1, wherein the element is a tri-lobe element.

7. The element of claim 1, wherein at least one lobe of the element has the first outer diameter or the second outer diameter as an outer diameter of the at least one lobe.

8. The element of claim 1, wherein at least one lobe of the element has the first inner diameter or the second inner diameter as an inner diameter of the at least one lobe.

9. A counter-rotating screw for a counter-rotating twin-screw processor having an axial bore housing the counter-rotating screw and another counter-rotating screw paired with the counter-rotating screw, wherein at least one portion of the counter-rotating screw comprises a plurality of lobes and defines a first outer diameter (FOD), a second outer diameter (SOD), a first inner diameter (FID) and a second inner diameter (SID), such that the first outer diameter is larger than the second outer diameter, the first inner diameter is larger than the second inner diameter, and a radial center distance 'a' between the paired counter-rotating screws is defined by (FOD+SID)/2, wherein at least one lobe having a cross sectional profile in a radial plane defining a first segment and a second segment, the first segment extending from the first outer diameter to the first inner diameter and the second segment extending from the first outer diameter to the second inner diameter, or the first segment extending from the second outer diameter to the first inner diameter and the second segment extending from the second outer diameter to the second inner diameter.

10. The counter-rotating screw of claim 9, wherein a difference in diameter between the first outer diameter and the second outer diameter is equal to a difference in diameter between the first inner diameter and the second inner diameter.

11. The counter-rotating screw of claim 9 defining a third segment and a fourth segment, the third segment extending from the first inner diameter to the first outer diameter and the fourth segment extending from the first inner diameter to the second outer diameter, or the third segment extending from the second inner diameter to the first outer diameter and the fourth segment extending from the second inner diameter to the second outer diameter.

12. The counter-rotating screw of claim 9, wherein at least one lobe having a cross sectional profile in the radial plane defining a first segment and a second segment, the first segment and the second segment extending from the first outer diameter to the first inner diameter, first outer diameter to the second inner diameter, the second outer diameter to first inner diameter, or the second outer diameter to the second inner diameter.

13. The counter-rotating screw of claim 9, wherein the counter-rotating screw is a bi-lobe counter-rotating screw.

14. The counter-rotating screw of claim 9, wherein the counter-rotating screw is a tri-lobe counter-rotating screw.

15. A counter-rotating twin-screw processor comprising:
a barrel defining a first cylindrical bore and a second cylindrical bore, wherein the first cylindrical bore and the second cylindrical bore intersect to form a chamber;
a first shaft that rotates within the first bore about an axis;
a second shaft that rotates within the second bore about an axis; and
at least one element coupled to the first shaft and the second shaft respectively, the at least one element having an axial bore for mounting on the first shaft or the second shaft, the at least one element having a plurality of lobes and defining a first outer diameter (FOD), a second outer diameter (SOD), a first inner diameter (FID) and a second inner diameter (SID), such that the first outer diameter is larger than the second outer diameter, the first inner diameter is larger than the second inner diameter, and a radial center distance 'a' between the first and second shafts is defined by (FOD+SID)/2, wherein at least one lobe having a cross sectional profile in a radial plane defining a first segment and a second segment, the first segment extending from the first outer diameter to the first inner diameter and the second segment extending from the first outer diameter to the second inner diameter, or the first segment extending from the second outer diameter to the first inner diameter and the second segment extending from the second outer diameter to the second inner diameter.

16. The counter-rotating twin-screw processor of claim 15, wherein a difference in diameter between the first outer diameter and the second outer diameter is equal to a difference in diameter between the first inner diameter and the second inner diameter.

17. The counter-rotating twin-screw processor of claim 15, wherein the at least one element defines a third segment and a fourth segment, the third segment extending from the first inner diameter to the first outer diameter and the fourth segment extending from the first inner diameter to the second outer diameter, or the third segment extending from the second inner diameter to the first outer diameter and the fourth segment extending from the second inner diameter to the second outer diameter.

18. The counter-rotating twin-screw processor of claim 15, wherein at least one lobe having a cross sectional profile in the radial plane defining a first segment and a second segment, the first segment and the second segment extending from the first outer diameter to the first inner diameter, first outer diameter to the second inner diameter, the second outer diameter to first inner diameter, or the second outer diameter to the second inner diameter.

19. The counter-rotating twin-screw processor of claim 15, wherein the at least one element is a bi-lobe element.

20. The counter-rotating twin-screw processor of claim 15, wherein the at least one element is a tri-lobe element.
